Europäisches Patentamt

(19) European Patent Office

Office européen des brevets

(11) EP 0 650 887 B1

(12) **EUROPEAN PATENT SPECIFICATION**

(45) Date of publication and mention
of the grant of the patent:
**09.06.1999 Bulletin 1999/23**

(51) Int. Cl.⁶: **B62M 23/02**

(21) Application number: **94117217.3**

(22) Date of filing: **31.10.1994**

(54) **Electrically assisted pedal operated vehicle**

Pedalfahrzeug mit elektrischem Hilfsmotor

Véhicule à pédale assisté par moteur électrique

(84) Designated Contracting States:
**DE FR IT**

(30) Priority: **29.10.1993 JP 29414193**
**29.10.1993 JP 29414093**
**14.10.1994 JP 27434694**

(43) Date of publication of application:
**03.05.1995 Bulletin 1995/18**

(73) Proprietor:
**YAMAHA HATSUDOKı KABUSHIKı KAISHA**
**Iwata-shi Shizuoka-ken, 438 (JP)**

(72) Inventors:
• **Ikuma, Katsumi**
**Iwata-shi, Shizuoka-ken, 438 (JP)**
• **Nagai, Sueji**
**Iwata-shi, Shizuoka-ken, 438 (JP)**
• **Ito, Fumio**
**Iwata-shi, Shizuoka-ken, 438 (JP)**

• **Miyata, Shoichiro**
**Iwata-shi, Shizuoka-ken, 438 (JP)**
• **Suganuma, Yasuo**
**Iwata-shi, Shizuoka-ken, 438 (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 517 224       EP-A- 0 569 954**
**EP-A- 0 590 674       WO-A-93/05977**

• **PATENT ABSTRACTS OF JAPAN vol. 16 no. 99**
**(M-1220) ,11 March 1992 & JP-A-03 277101**
**(TOYOTA MOTOR CORP.) 9 December 1991,**

**Description**

The present invention relates to an electrically assisted pedal operated vehicle, in particular a bicycle, comprising a human power drive system and an electrical drive system provided in parallel to each other, wherein an output of said electric drive system is controlled in compliance with changes in the output of the human power drive system, a human power detection means and means for detecting the variation range of the human driving power detected.

Such vehicles, for example, bicycles, which comprise a man power drive system and an assistant electric drive system in parallel to each other such as, for example, shown in EP-A2-0 517 224 or shown in post-published European patent applications EP-A-0 569 954 (18.11.93) and EP-A-0 590 674 (6.4.94) usually control the output of the electric drive system in dependency of the change in the pedal depressing force of the man power drive system. Accordingly, the arrangement alleviates the burden on the human effort by increasing the electric assist motor drive force in proportion to the magnitude of the human power such as pedal depressing force. Thus, the detection of the actual driving conditions of the vehicle, in particular in terms of the pedal depressing force (or under additional consideration of the vehicle speed) the actual driving conditions were detected to derive a target value for the desired electrical power assist.

In such a case, if the pedal force changes suddenly, the target value of assist amount also changes largely. If the pedal force increases suddenly, for instance, the target value of the amount of electrical power assist also increases suddenly and therefore, the motor current of the electric motor also increases suddenly. As a result, a large impact is applied to the drive system which impairs the riding comfort. Specifically at the time of starting when the motor speed is low, the amount of electrical assist increases and the motor current also increases excessively which, aside from the undesirable impact to the drive system, also accelerates the deterioration of the battery of the electrical driving system.

Thus, it is an objective of the present invention to provide an electrically assisted pedal operated vehicle as indicated above wherein the amount of motor assist is prevented from changing suddenly when a sudden change of pedal force is detected, thus reducing impacts from being applied to the drive system, improving the riding comfort and preventing the battery of the electric drive system from deteriorating rapidly.

In order to perform the aforeindicated objective, according to the present invention the above indicated vehicle is improved in that a control means is provided which has a calculating means for calculating at constant time intervals a target value for the amount of electrical power assist in response to the human driving power and for driving the electric motor to approach the actual electrical power assist to said target value, and that a motor assist limiting means is provided increasing or decreasing the amount of motor assist gradually at said constant time intervals by prescribing the amount of change of the target value between subsequent time intervals.

Thus, as the control means calculates the desired target value for the amount of electrical power assist at constant intervals in response to the human driving power appropriate power assist of the human pedal pressing force is assured. On the other hand, as the motor assist limiting means is provided for increasing or decreasing the amount of power assist gradually at said constant time intervals while avoiding excessive changes of the respective target values of electrical power assist between subsequent intervals the amount of motor assist changes smoothly even if the human drive force changes abruptly. As a result mechanical impacts to the drive system of the vehicle are reduced and the riding comfort and ride feeling are improved.

Moreover, considering the motor current of the electric motor of the electrical power assist system as the variable, which is adjusted in response to the actual driving conditions by means of the motor assist limiting means the motor current is prevented from increasing excessively at the time of starting and the battery of the electrical power assist system is prevented from deteriorating rapidly.

According to a preferred embodiment of the present invention also the vehicle speed can be detected and incorporated into the actual driving conditions detecting system for controlling the electrical power assist according to the output of the human power drive system.

According to yet another preferred embodiment, the control means calculates the target value for the amount of electrical power assist in compliance with the output of the human power drive system and the vehicle speed detection means.

In the following the present invention is explained in greater detail by means of a preferred embodiment thereof in conjunction with the accompanying drawings, wherein:

Fig. 1, is a bicycle with an electric motor according to an embodiment of the present invention,

Fig. 2, is a block diagram of the power train of the bicycle having a human power drive system and an assisting electrical drive system,

Fig. 3, is a functional block diagram of a control unit of the embodiment,

Fig. 4, is an operational flow chart of a run and stop control function,

Fig. 5, is an operational flow chart of a system protection function and a failure diagnosis function,

Fig. 6, is an operational flow chart of a start torque slide control of the control unit,

Fig. 7, is an operational flow chart of a power assist delimiting function of the control unit,

Fig. 8, is a diagram showing the change in the electrical assist power versus time,

Fig. 9, is an operational flow chart of a stop discrimination control of the control unit,

Fig. 10, is an operational flow chart of a battery low voltage checking function of the control unit,

Fig. 11, is an operational flow chart of a failure diagnosis of the vehicle speed sensor,

Fig. 12a, is a diagram showing the vehicle speed versus time, while,

Fig. 12b, shows a diagram of the pedal force of the operator versus time,

Fig. 13, is a functional block diagram of the failure diagnosis function of the control unit regarding the vehicle speed sensor.

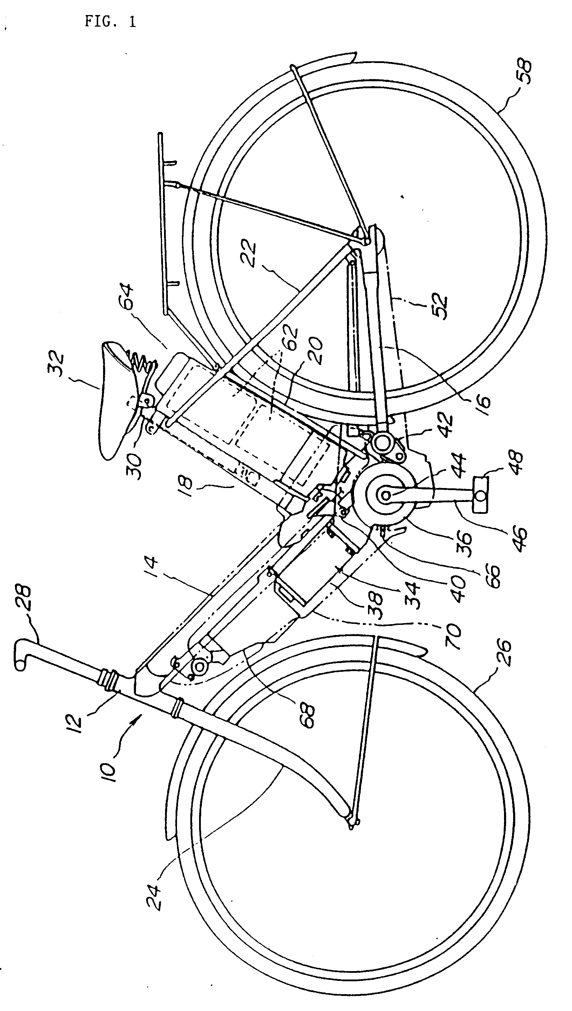

An overall constitution of the vehicle body will be described in reference to FIGs. 1 through 3. FIG. 1 shows a main frame 10 comprising a down tube 14 extending down backward from a head pipe 12, a right and left pair of chain stays 16 (only one is shown) extending backward from the lower end of the down tube 14, a seat tube 18 and a right and left pair of auxiliary stays 20 (only one is shown) rising from the lower portion of the down tube 14 upward, and a right and left pair of back stays 22 (only one is shown) connecting the upper ends of the seat tube 18 and the auxiliary stays 20 to the rear ends of the chain stays 26.

A fork 24 is rotatably supported by the head pipe 12. A front wheel 26 is supported at the lower end of the fork 24. Bar handles 28 are attached to the upper end of the fork 24. A seat post 30 with a saddle 32 attached to the top is inserted from above into the seat tube 18 so as to be adjustbale in height.

A power unit 34 is integrally made up with a bottom bracket case 36 (hereinafter referred to as BB case) and a permanent magnet type dc electric motor 38. The BB case 36 is secured to the rear lower part of the down tube 14 by means of brackets 40 and 42. A crankshaft 44 passes through the BB case 36 of the power unit 34 with cranks 46 attached on both ends. Crank pedals 48 are attached to the cranks 46.

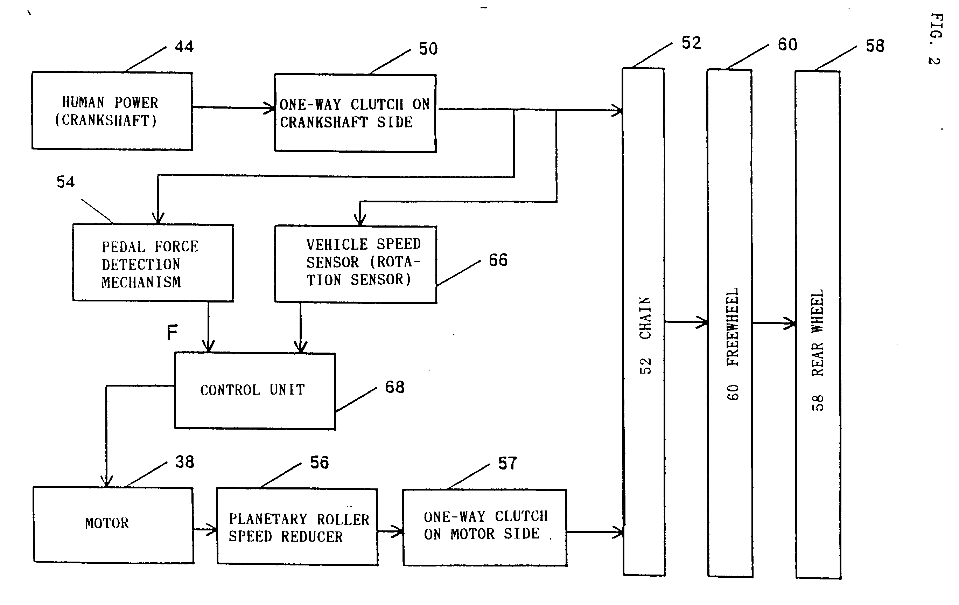

The power unit 34 includes gears and sprockets (not shown) for transmitting the rotation of the crankshaft 44 to a chain 52 through a one-way clutch (FIG. 2) on the crankshaft side. A planetary gear mechanism is interposed between the crankshaft 44 and the chain 52.

The pedal force is inputted to a planetary gear of the planetary gear mechanism and outputted from a ring gear to the chain 52. The pedal force F is detected by detecting the torque applied to a sun gear in the center by means of a pedal force detection mechanism consisting of a potentiometer. Rotation of the motor 38 is transmitted to the chain 52 through a planetary roller type speed reduction mechanism 56 and a one-way clutch 57 on the motor side.

A rear wheel 58 is attached to the rear end of the chain stays 16, namely at the joint between the chain stays 16 and the back stays 22. Here, the hub of the rear wheel 58 constitutes a freewheel 60 to be driven by the chain 52 in the forward direction only. FIG. 1 shows a chargeable battery 62 such as a lead acid battery vertically stacked and held in an elongate battery case 64.

A rotation sensor 66 is attached to the BB case 36 to detect the rotation speed of the sprocket (not shown) on which the chain 52 is wound. The rotation sensor 66 serves also as vehicle speed detection means for detecting the vehicle speed. A control unit 68 is attached to the front lower part of the down tube 14. The control unit 68 and the power unit 34 are covered by a cover 70.

The pedal force F detected by the pedal force detection mechanism consisting of a potentiometer and the vehicle speed S detected by the vehicle speed sensor 66 are inputted to the control unit 68 which controls the motor current according to the pedal force F and the vehicle speed S to produce a motor output or a motor torque $T_M$.

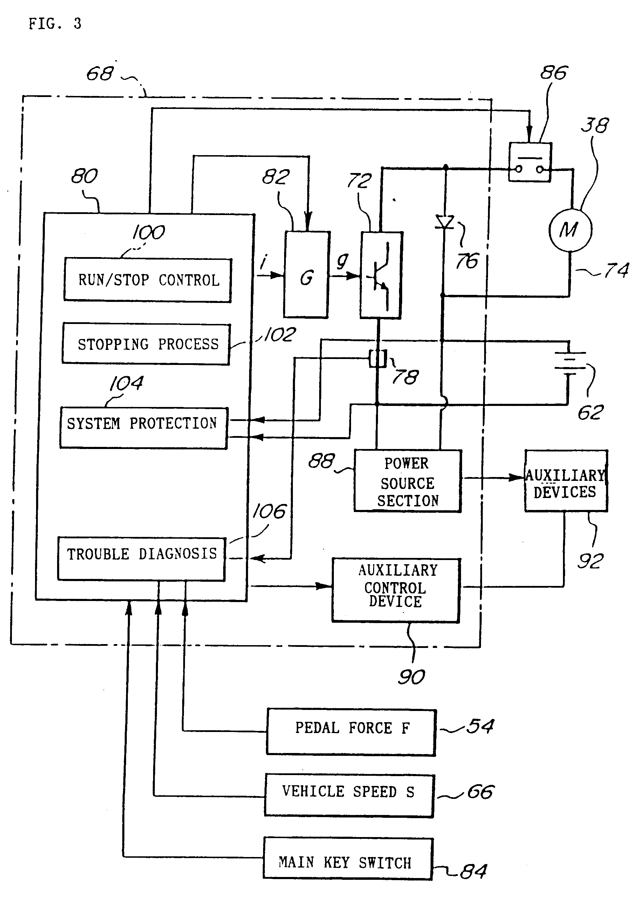

The control unit 68 is constituted as shown in FIG. 3. The motor 38 and the battery 62, together with a switching circuit 72, constitute a closed circuit. This closed circuit is a main circuit 74. The switching circuit 72 is constituted for instance with a MOS-FET. A flywheel diode 76 is connected in parallel to the motor 38. A shunt 78 for detecting current is attached to the main circuit 74.

A CPU 80 outputs a command value (i) for the output (torque) $T_M$ of the motor 38 according to the pedal force F and the vehicle speed S. In other words, the CPU issues the command value so that the output (torque) $T_M$ of the motor 38 is changed periodically in synchronism with the periodical changes in the pedal force. It may also be arranged that the vehicle speed S is restricted by restricting the motor output $T_M$ when a given vehicle speed S is reached.

A gate circuit 82 outputs a gate signal (g) for driving the switching circuit 72 corresponding to the command value (i) for variable duty ratio supplied from the CPU 80. In other words, to increase the motor output $T_M$, the ratio of on time to the total of on time and off time (called a duty ratio) of the command value (i) is increased.

The gate signal (g) issued by the gate circuit 82 according to the command value (i) is sent to a switching element of the switching circuit 72 to selectively turn each switching element on and off.

A main key switch 84 is shown in FIG. 3. When the main switch 84 is turned on, the CPU 80 turns on the main relay 86 intervening in the main circuit 74, and at the same time, brings a power source section 88, an auxiliary device control section 90, the gate circuit 82, and all parts of the control unit 68 into starting state. The power source section 88 produces a power source voltage for the CPU 80 and a drive voltage for the auxiliary devices 92 by stepping down the voltage of the battery 62 for running by means of a switching regulator for instance.

Here, it may also be arranged that another small capacity battery (not shown) is connected to the power source section 88 and charged by current stepped down from the running battery 62. The auxiliary devices 92 includes lamps and meters driven by the power from the power source section 88 according to the command of the auxiliary device control section 90.

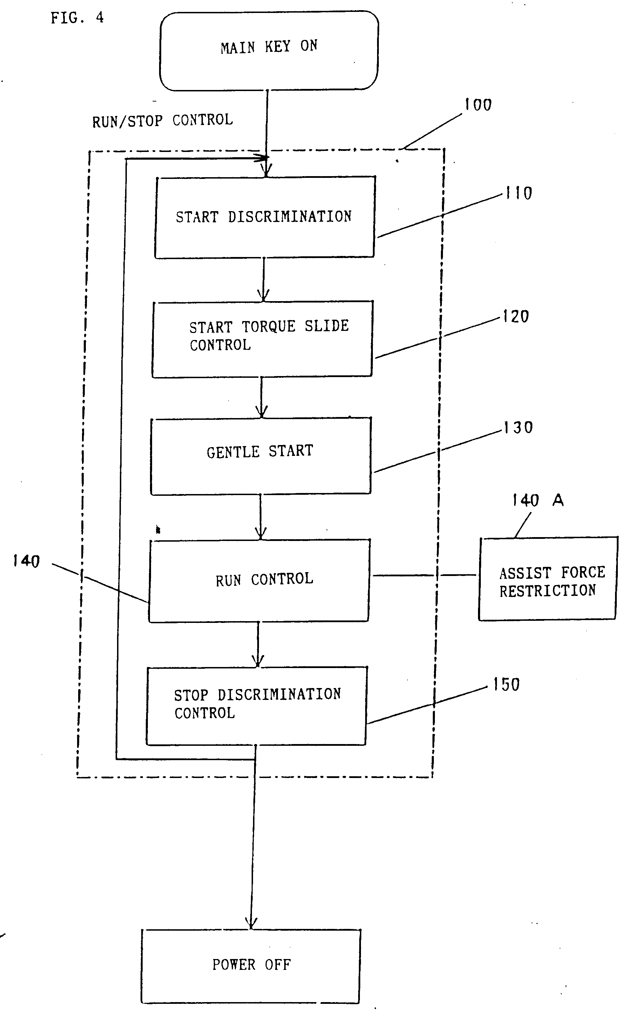

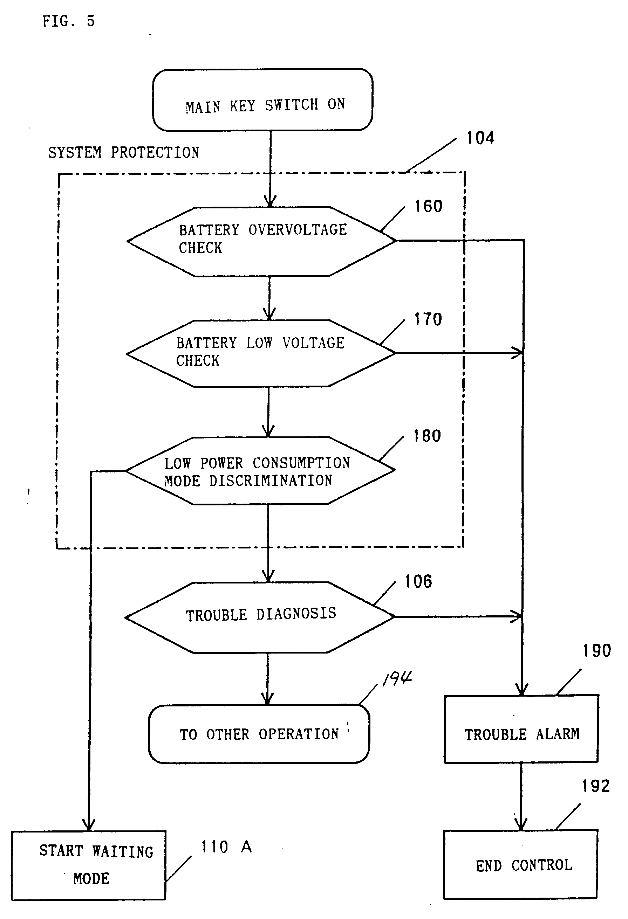

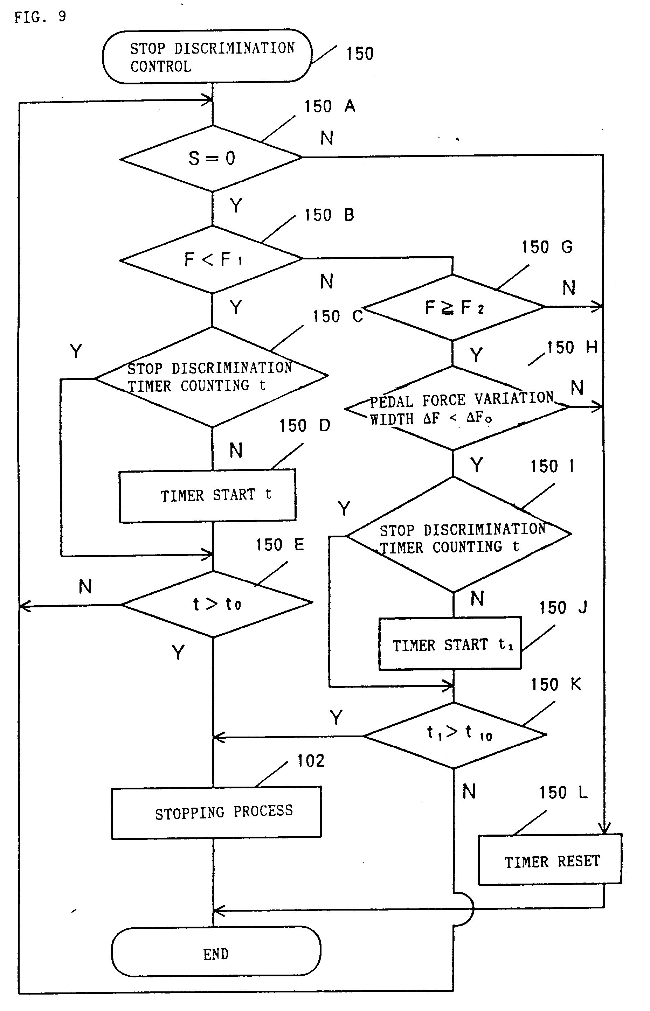

The function of the CPU will be described below in reference to FIGs. 3 through 13. The CPU has various functions operating according to software. These functions are roughly divided into the following four as shown in FIG. 3. They are; a run and stop control function 100, a stop process function 102, a system protection function 104, and a trouble diagnosis function 106. The system protection function 104 and the trouble diagnosis function 106 are repeated at suitable timings while the CPU 80 is performing other processes, and processed for instance about every 10 milliseconds. FIG. 4 is a flow diagram roughly showing the operation of the run and stop control function 100 and the stop process function 102. FIG. 5 is a flow diagram roughly showing the operation of the system protection function 104, and the trouble diagnosis function 106.

The run and stop control function 100 performs various operations from start to stop discrimination according to turning the main key switch 84 on. This is repeated for instance about every 10 milliseconds. The contents of the function 100 will be described below for each function.

First, the start discrimination function 110 will be described. This function 110 discriminates an intention of a start being shown when the pedal force F exceeds a given value $F_0$ (for instance 30 kg), and moves on to the run control state by way of a start torque slide control function 120 which will be described below.

The start torque slide control 120 is for cancelling the result of the start discrimination when the vehicle speed S remains zero for a given period of time (3 seconds for instance) after the start intention is discriminated as shown by the start discriminating function 110. An example of such a case is that a pedal force is applied while brake is applied to prevent starting. If the motor 38 is driven in that case in a similar manner as in normal running, an excessive current will continue to flow in the motor 38 to accelerate depletion of the battery 62 and to put a large load on the drive system. That is the reason to interrupt the start after a given period of time.

When the vehicle remains stopped under the condition of a constant pedal force being applied, as in the case a pedal force is applied under the condition of the front wheel being pressed against a wall, it is not desirable that a motor current flows repeatedly at constant time intervals. In view of this, this embodiment is arranged to increase the given value for discriminating the start (start discrimination pedal force reference value $F_0$) by a constant value $\alpha$ every time the start discrimination is made.

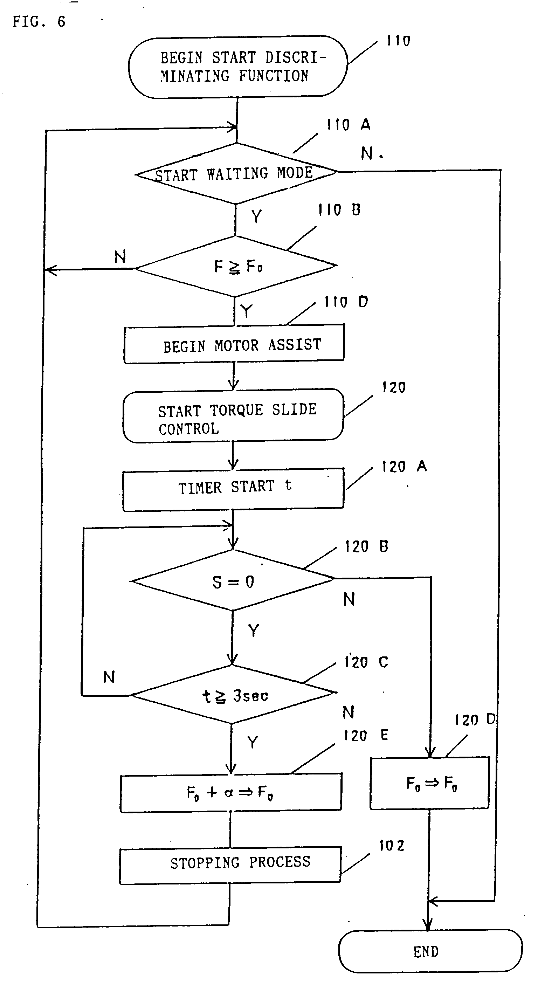

FIG. 6 is a flow diagram of the above. Since this embodiment is arranged so that the start waiting mode is automatically set when the main key switch is turned on while the vehicle is at rest or driven by the human power only, it is discriminated as the start waiting mode in the step 110A. This start waiting mode discriminating step 110A is for discriminating whether or not the current mode is the one waiting for a start. If the mode is waiting for the start, the intention of start is discriminated as present when the pedal force F is equal to or greater than $F_0$ (step 110B). If $F \geq F_0$, the motor assist is started and at the same time the mode is set to the gentle starting mode (step 110D). Next the process proceeds to the start torque slide control 120. In this control 120, first the timer is started (step 120). If the mode is not the start waiting mode, it means that the vehicle is already running and therefore the process bypasses the start discrimination 110 and the start torque slide control 120, and proceeds to the next process of the gentle starting 130.

The vehicle speed S is checked if it is zero or not (step 120B). If S = 0, then the timer is checked if its time count (t) has reached a given value $t_0$ (for instance 3 seconds) (step 120C). If S is not zero, it is discriminated that actual running has been started, and the start discrimination function is finished without changing the value of $F_0$ (step 120D).

If the time t has reached $t_0$, it is controlled so that the reference value $F_0$ is increased to $F_0 + \alpha$ (step 120E), and to stop the motor assist. The process returns to the start waiting mode (step 102). If the time t has not reached $t_0$, the process returns to the step 120B to check the vehicle speed S if it is zero or not. If $F \geq F_0$ while the pedal force remaining applied, it is again discriminated as the start being intended (step 110B), and the motor assist is started (step 110D). After this operation is repeated for (n) times and if $F \leq F_0 + n\alpha$, the motor assist is not made any more (step 110B).

If the assist amount (hereinafter referred to as target assist amount) as calculated is suddenly given when the motor assist is started, a rush current flows to the motor like a big shock. Therefore, a gentle start function 130 is provided to smoothly increase the assist amount given as an actual command value (hereinafter referred to as actual assist amount). Namely, 10% of the actual assist amount is added to the actual assist amount at constant time intervals (for instance 0.015 seconds) and, when the target assist amount is reached, the process sets to the running mode, and proceeds to the run control 140.

In the run control 140 for ordinary running, an optimum assist amount is calculated in consideration of the vehicle speed S, pedal force F, power source voltage, and motor current, and the assist amount is renewed at constant time intervals (for instance 0.01 seconds). In that case, the amount of change from the previous assist amount is restricted to provide a smooth assist feeling. Namely as shown in FIG. 4, an assist power restricting function (step 140A) is provided.

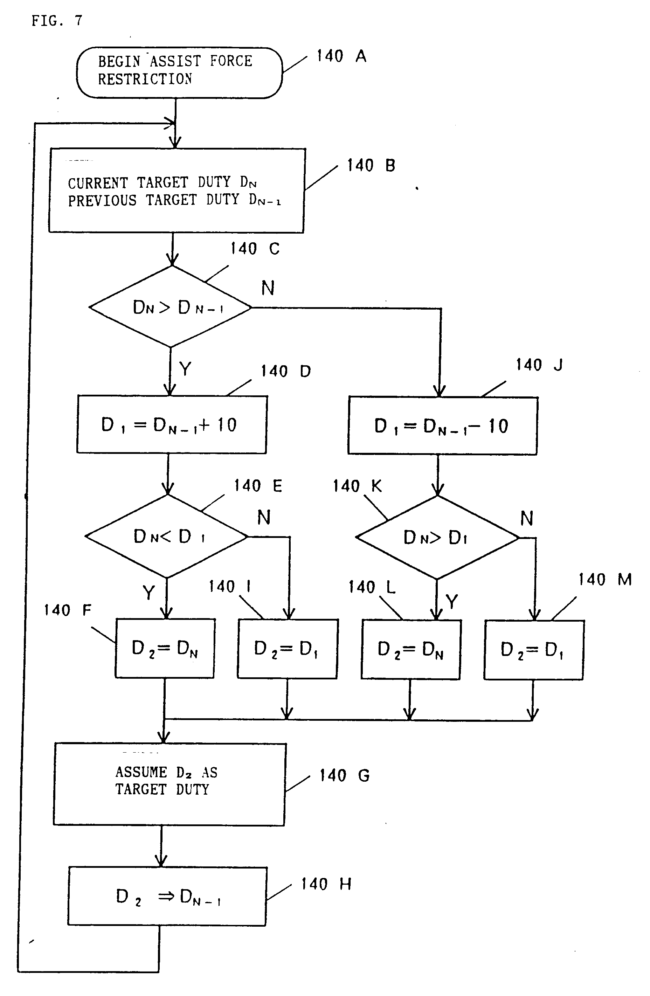

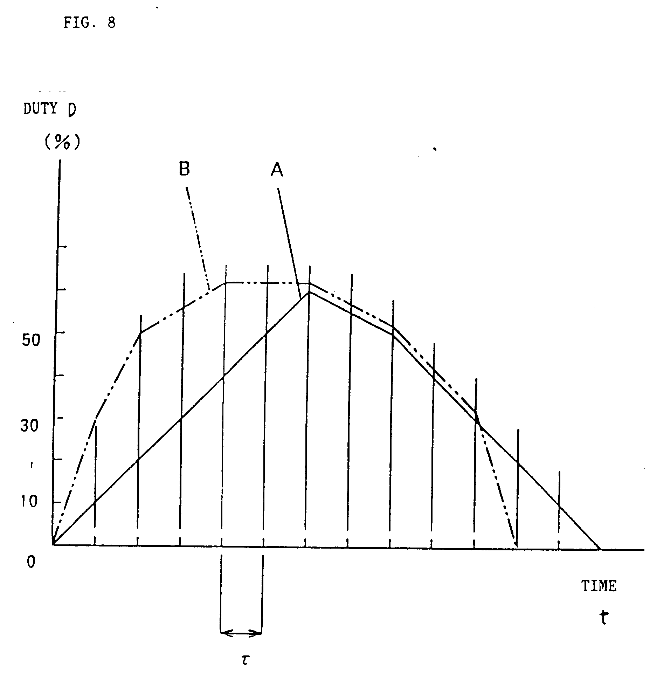

FIG. 7 is an operation flow chart of the assist power restricting function 140A and FIG. 8 is a diagram showing an example of changes in the assist power with time. Since this embodiment controls the motor current by PWM, when the motor current is expressed by the duty D%, control is performed so that target duty D (equivalent to the target assist amount; duty is equivalent to assist amount in the following description) does not change in excess of a given value (for instance 10%).

Referring to FIG. 7, a current duty $D_N$ and a target duty $D_{N-1}$ preceding by a time $\tau$ are stored (step 140B), and if the duty D is increasing (step 140C), the duty $D_{N-1}$ is increased by 10% and the result is deemed as D1 (step 140D). If $D_N < D_1$, increase in $D_N$ is not greater than 10% (step 140E) and it is assumed as $D_2 = D_N$ (step 140E) and the $D_2$ is deemed as the target duty to control the motor output (step 140G). Then assuming the $D_2$ as the previous $D_{N-1}$, the process returns to the step 140B.

If $D_N$ is equal to or greater than $D_1$ in the step 140D, it means that the increase in the target duty is 10% or more. Then it is made that $D_2 = D_1$ (step 140I) and control is performed with the $D_2$ as a target duty.

If the target duty is decreasing (step 140C), the previous target duty $D_{N-1}$ is reduced by 10% and the result is used as $D_1$ (step 140J). If $D_N > D_1$ (step 140K), the decrease is less than 10%. Therefore, $D_N$ is used as the target duty $D_2$ (step 140L). If $D_N \leq D_1$, the decrease is not less than 10%, and the $D_1$ is used as a target duty $D_2$ (step 140M).

The above process is shown in FIG. 8 with solid lines A. The phantom lines B show changes in the duty D when control by the assist power restricting means 140A is not performed. In this way, the increase and decrease in the motor current is smoothed by the use of the control 140A. As a result, ride feeling is improved and shocks to the drive system are reduced.

At the time of starting in particular, current is restricted to a moderated value even at low motor speeds to prevent the battery from deteriorating rapidly. This run control also restricts the motor assist ratio at high speeds. To do that, the assist ratio may be set to a small value on map defining the assist ratio relative to the vehicle speed S and the pedal force F.

In this embodiment, intention of a stop is discriminated by the use of the pedal force F and the vehicle speed S without using a brake switch.

First, when the vehicle speed is zero (step 150A), if the pedal force is less than a given value $F_1$ (corresponding to 12 kg, or a torque of about 2 kg-m, for instance) (step 150B), the timer is started (step 150C). If the timer is already counting, the counting is allowed to continue (step 150D). When the accumulated value t of the timer reaches a given value $t_0$ (1 second for instance) (step 150E), the process proceeds to a stop process to make the motor output zero (step 102F).

When it is not $F < F_1$ (step 150B) and F is not less than $F_2$ ($F_2$ is greater than $F_1$, 30 kg for instance) (step 150G), other timer is started (step 150I) when variation width $\Delta F$ of the pedal force F is not greater than a given value $\Delta F_0$ (12 kg for instance) (step 150H). If the timer is already counting, the counting is allowed to continue (step 150J). When the accumulated value $t_1$ continues for a give value $t_{10}$ (2 seconds for instance), intention of stop is discriminated as present (step 150J). The timer is reset when the vehicle speed S is not zero (step 150A), or the above conditions are not met (step 150L), and the process returns to the step 10. At this time, the mode is retained as it is.

When the intention of a stop is discriminated as present as described above, the process proceeds to a stop process (step 102) to decrease the motor output gradually, and prepares for the next start, or wait for the next input of the pedal force F by setting the process to the start waiting mode. When there is no input signal from outside such as the pedal force F and the vehicle speed S for more than a given period of time, the process proceeds to an energy saving mode. For instance, the gate circuit 82, main relay 86, power source section 88 are deenergized, and the CPU 80 stops operating except for the function of discriminating the presence of external inputs.

The system protection function 104 will be described below. As shown in FIG. 5, this function consists of a battery overvoltage checking function 160, a battery low voltage checking function 170, and a low power consumption mode discrimination function 180.

The battery overvoltage checking 160 is for protecting the system as when the battery is replaced with one of a higher voltage by modification. Namely, when the main key switch 84 (FIG. 3) is turned on, the battery voltage is checked if it is higher than a given value. If higher, the control is stopped to restrict the running to proceed to the energy saving mode. In this way, running during charging is securely prevented. It is desirable to enhance safety so that the running is disabled unless the main key switch 84 is turned off, even if the battery voltage recovers normal level under that condition.

The battery low voltage checking function 170 is for protecting the battery from discharging excessively when the battery voltage lowers excessively. The battery voltage, even if it lowers excessively during running, recovers and rises when the discharge current is shut off by stopping the control. Therefore, the control becomes possible again. However, the battery deteriorates because of excessive discharge. Therefore, it is preferable to check the voltage without load immediately after turning on the main key switch 84, and to issue an alarm if the voltage is lower than a preset value.

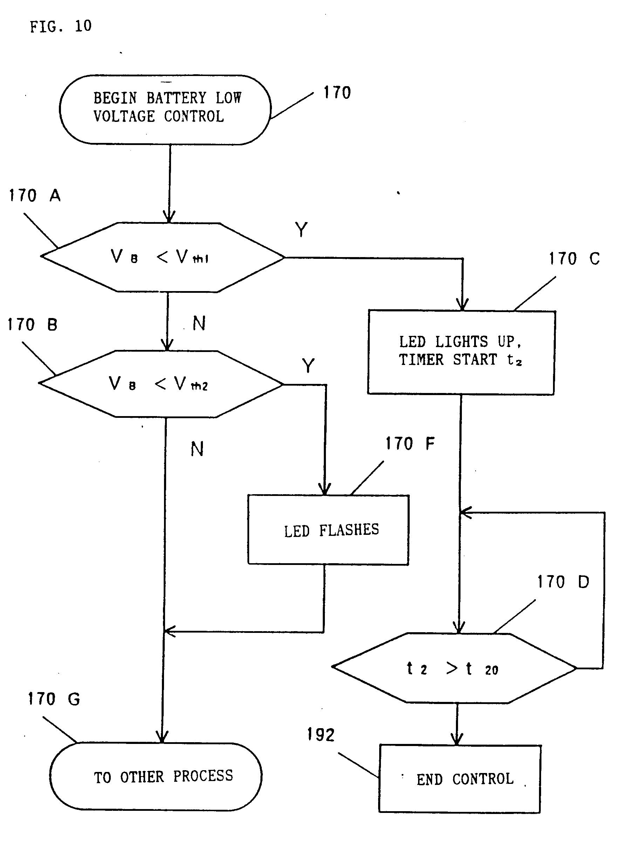

The battery low voltage checking function 170 may also be as shown in FIG. 10. Namely the battery voltage $V_B$ is compared with two threshold values $V_{th1}$ and $V_{th2}$ ($V_{th1} < V_{th2}$) (steps 170A, 170B). If $V_B$ is not greater than $V_{th1}$, an LED is lit up and the timer is started (step 170C). When the timer count reaches an accumulated time $t_{20}$ (for instance 5 seconds) (step 170D), entire control is stopped (step 192).

If $V_B$ is between $V_{th1}$ and $V_{th2}$ (steps 170A, 170B) the LED flashes as an alarm (step 170F). If $V_B$ is not less than $V_{th2}$, there is no problem with the battery voltage and therefore other control is performed (step 170G).

As described above, when the voltage $V_B$ is not greater than $V_{th1}$, the vehicle is prevented from stopping suddenly by arranging that the control is stopped not immediately but after a given period of time during which the LED is lit up. For instance, it is conceivable that when the vehicle is started at an intersection, the voltage lowers and the LED lights up before finishing crossing the intersection. Even in such a case, running can be continued within the timer set period of $t_{20}$ to finish crossing the intersection.

The low power consumption mode discriminating function 180 is for discriminating the energy saving mode described before. When the vehicle is at rest (S = 0) and the input signal for the vehicle speed S is not made continuously for more than a given period of time (5 minutes for instance), the process is brought to the energy saving mode. In this mode, as described before, the gate circuit 82, main relay 86, power source section 88 are deenergized, and the CPU 80 stops operating except for the function of discriminating the presence of external inputs.

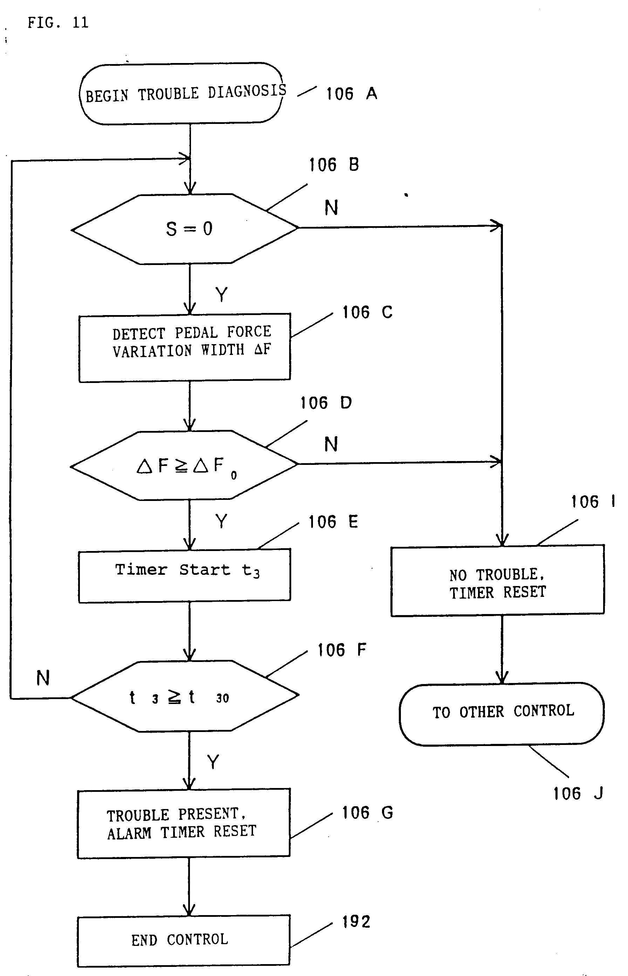

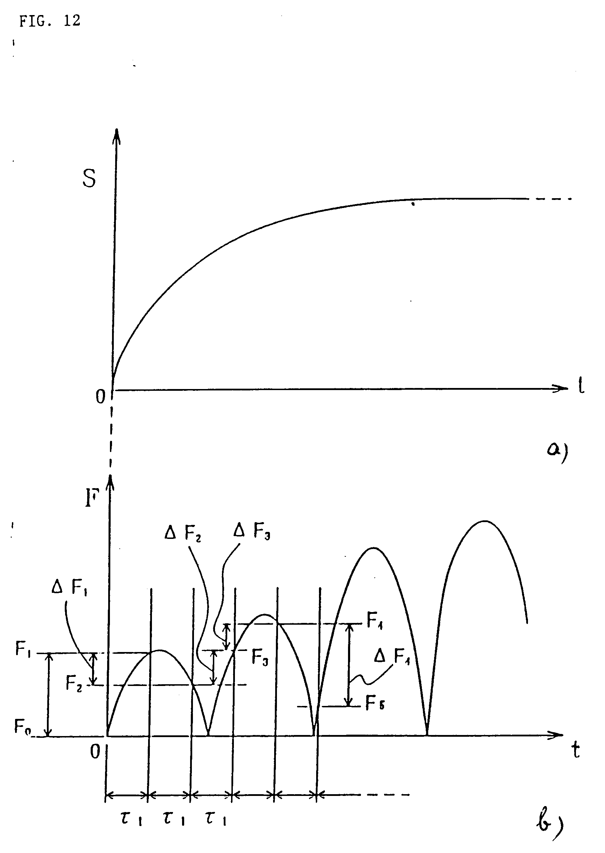

The fail-safe means providing a trouble diagnosis function 106 searches for various troubles and failures and if any trouble exists an alarm is issued (step 190) in a similar manner as the steps 160 and 170 to stop the control (step 192). In the control stop step 192, the main relay 86 is turned off, and the CPU stops all of its functions except for the alarm process and the low power consumption mode discriminating function. Fig. 11 is a flow chart showing the trouble detecting function of the vehicle speed sensor 66 as an example of the trouble diagnosis function 106, and Fig. 12 is an explanatory diagram of the operation.

The failure detection of the vehicle speed sensor 66 is the discrimination of the absence of output of the vehicle speed sensor 66 before and after starting. In other words, when this process starts (step 106A) and the output of the vehicle speed sensor (vehicle speed S) is zero (step 106B), the variation width ΔF of the pedal force F is detected (step 106C). The variation width ΔF, as shown in FIG. 12, is obtained from the differences between the pedal forces $F_n$ and $F_{n+1}$ or $\Delta F_n = F_{n+1} - F_n$ detected at constant time intervals $\tau_1$. The time $\tau_1$ is set to 0.5 seconds for instance.

The difference $\Delta F_n$ is compared with a constant value $\Delta F_0$ (step 106D). If $\Delta F_n \geq \Delta F_0$, the timer is started (step 106E) and when its accumulated value $t_3$ reaches a given value $t_{30}$, the vehicle speed sensor 66 is discriminated as having a trouble (step 106G). Then an alarm is issued and the timer is reset. The control is stopped (step 192). When the vehicle speed S becomes not zero before the accumulated timer count $t_3$ reaches $t_{30}$ (step 106B), or $\Delta F < \Delta F_0$ (step 106D), it is discriminated as absence of trouble, and the timer is reset (step 106I), and the process proceeds to other control (step 106J).

As described above, even if the vehicle speed S is zero, the trouble in the vehicle sensor 66 is discriminated as present when the variation width ΔF is greater than a given value. Therefore, the trouble is detected even if the output from the vehicle speed sensor 66 is not present because of wire breakage or the like. If no trouble is detected after finishing the trouble diagnosis 106 as described above, the process proceeds to other normal control (step 194, FIG. 5).

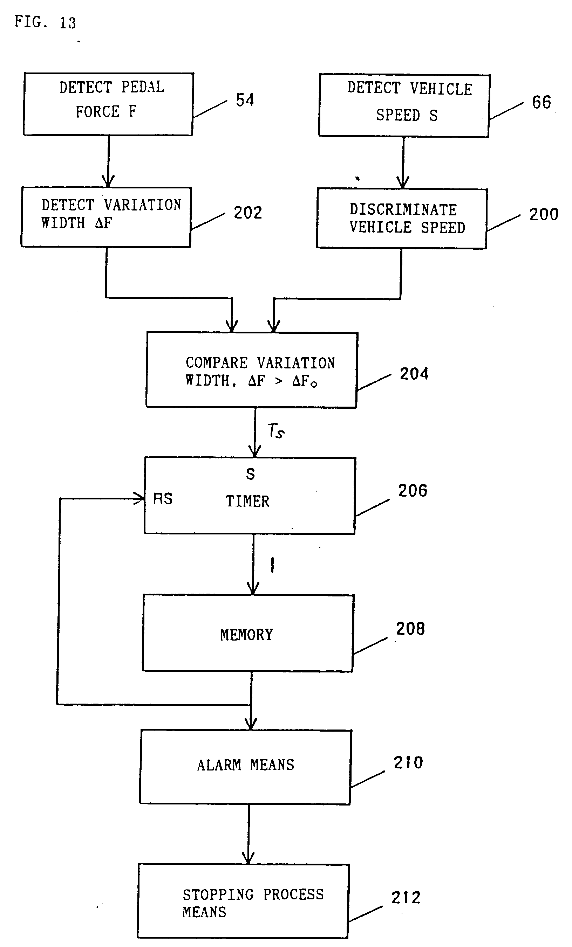

The trouble diagnosis function 106A of the vehicle speed sensor 66 may be constituted as shown in the block diagram of FIG. 13. Namely the vehicle speed S detected by the vehicle speed detection means consisting of the vehicle speed sensor 66 is discriminated if the S = 0 or not by a vehicle speed dicrimination means 200. The numeral 202 denotes means for detecting variation width of the pedal force F. The variation width ΔF obtained here is inputted to a variation width comparison means 204 when the vehicle speed S is zero, compared with a given value $\Delta F_0$. When ΔF > $\Delta F_0$, a timer start signal $T_s$ is issued.

A timer 206 is reset by the start signal $T_s$ and starts counting time. The timer 206 issues a trouble discrimination signal I when the accumulated time count reaches a given time $t_{30}$. The trouble discrimination signal I is stored in a buffer memory 208 and at the same time causes an alarm means 210 to issue an alarm, and causes a stop process means 212 to stop the control. It also resets the timer 206.

While the target assist amount calculated according to the pedal force F or to both pedal force and vehicle speed is represented by the duty in the assist force restricting means 140A of this embodiment and it is arranged that the amount of change at every time interval is restricted within 10%, this invention is not limited to this embodiment. It may also be arranged that the amount of change in the target assist amount is restricted within a given rate of the motor drive torque, or the amount of change in the duty or torque is set within a numerically determined range.

In this embodiment, the variation width is taken as the difference $\Delta F$ between two consecutive detected values of the pedal force F detected at constant time intervals $\tau_1$ when the trouble of the vehicle speed sensor 66 is to be detected. However, this invention is not limited to this embodiment. For instance, the variation width may also be taken as the difference between maximum and minimum values of the pedal force within a variation period. This invention may also be applied to vehicles other than the bicycle, such as a wheelchair and a hand-pushed cart. In that case, the human drive power is the manual force.

## Claims

1. Electrically assisted pedal operated vehicle, in particular bicycle, comprising a human power drive system and an electrical drive system provided in parallel to each other wherein an output of said electric drive system is controlled in compliance with changes in the output of the human power drive system, a human power detection means and means for detecting the variation range of the human driving power detected, **characterised in that** a control means (68) is provided including calculating means for calculating at constant time intervals a target value ($D_{N-1}$) for the amount of electrical power assist in response to the human driving power and for driving the electric motor (38) to approach the actual electrical power assist to said target value ($D_{N-1}$), and that a motor assist limiting means is provided increasing or decreasing the amount of motor assist gradually at said constant time intervals by prescribing the amount of change of the target value ($D_{N-1}$) between subsequent time intervals.

2. Electrically assisted pedal operated vehicle as claimed in claim 1, **characterised in that** a vehicle speed detection means (66) is provided.

3. Electrically assisted pedal operated vehicle as claimed in claim 2, **characterised in that** the control means (68) calculates the target value ($D_{N-1}$) for the amount of electrical power assist in compliance with the output of the human power drive system and the vehicle speed detection means (66).

## Patentansprüche

1. Pedalbetätigtes Fahrzeug mit elektrischer Unterstützung, insbesondere Fahrrad mit einem durch menschliche Leistung betriebenen Antriebssystem und einem elektrischen Antriebssystem, die parallel zueinander vorgesehen sind, wobei eine Leistungsabgabe des elektrischen Antriebssystems in Übereinstimmung mit den Änderungen des Ausgangs der Leistungsabgabe des durch menschliche Leistung betriebenen Antriebssystems gesteuert wird, einer Erfassungseinrichtung für die menschliche Leistung und einer Einrichtung zur Erfassung des Änderungsbereiches der erfaßten menschlichen Leistung, **dadurch gekennzeichnet,** daß eine Steuereinrichtung (68) vorgesehen ist, die eine Berechnungseinrichtung enthält, um zu konstanten Zeitintervallen einen Sollwert ($D_{N-1}$) für die Größe der elektrischen Leistungsunterstützung in Abhängigkeit von der menschlichen Antriebsleistung zu berechnen und um den Elektromotor (38) anzutreiben, um die tatsächliche elektrische Leistungsunterstützung diesem Sollwert ($D_{N-1}$) anzunähern, und daß eine Begrenzungseinrichtung für die Motorunterstützung vorgesehen ist, die die Größe der Motorunterstützung zu den genannten konstanten Zeitintervallen allmählich erhöht oder verringert, indem die Größe der Änderung des Sollwerts ($D_{N-1}$) zwischen aufeinanderfolgenden Zeitintervallen vorgeschrieben wird.

2. Pedalbetätigtes Fahrzeug mit elektrischer Unterstützung nach Anspruch 1, **dadurch gekennzeichnet**, daß eine Fahrzeuggeschwindigkeits-Erfassungseinrichtung (66) vorgesehen ist.

3. Pedalbetätigtes Fahrzeug mit elektrischer Unterstützung nach Anspruch 2, **dadurch gekennzeichnet**, daß die Steuereinrichtung (68) den Sollwert ($D_{N-1}$) für die Größe der elektrischen Leistungsunterstützung in Übereinstimmung mit der Ausgangsgröße des durch menschliche Leistung betriebenen Antriebssystems und der Fahrzeuggeschwindigkeits-Erfassungseinrichtung (66) berechnet.

## Revendications

1. Véhicule à pédale assisté électriquement, en particulier une bicyclette, comprenant un système d'entraînement par puissance humaine et un système d'entraînement électrique prévus parallèlement entre eux, dans lequel un signal de sortie dudit système d'entraînement électrique est commandé en conformité avec des changements du signal de sortie du système d'entraînement par puissance humaine, des moyens de détection de puissance humaine et des moyens pour détecter la plage de variation de la puissance humaine d'entraînement détectée, caractérisé en ce qu'on prévoit des moyens de commande (68) incluant des moyens de calcul pour calculer à intervalles de temps constants une valeur cible ($D_{N-1}$) comme quantité de puissance électrique d'assistance en réponse à la puissance humaine d'entraînement et pour entraîner un moteur électrique (38) afin d'approcher la puissance électrique présente d'assistance de ladite valeur cible ($D_{N-1}$), et en ce que des moyens de limitation d'assistance par moteur sont prévus pour augmenter ou diminuer graduellement la quantité d'assistance par moteur auxdits intervalles de temps constants en imposant la quantité de changement de la valeur cible ($D_{N-1}$) entre des intervalles de temps successifs.

2. Véhicule à pédale assisté électriquement selon la revendication 1, caractérisé en ce qu'on prévoit des moyens de détection de vitesse de véhicule (66).

3. Véhicule à pédale assisté électriquement selon la revendication 2, caractérisé en ce que les moyens de commande (68) calculent la valeur cible ($D_{N-1}$) pour la quantité de puissance électrique d'assistance en conformité avec le signal de sortie du système d'entraînement par puissance humaine et des moyens de détection de vitesse de véhicule (66).

FIG. 1

FIG. 2

FIG. 3

FIG. 4

```
                    ┌─────────────────────┐
                    │    MAIN KEY ON      │
                    └─────────────────────┘
                               │
   RUN/STOP CONTROL            │              ┌ 100
        ┌──────────────────────┼──────────────────────┐
        │                      ▼                       │
        │          ┌─────────────────────┐     ┌ 110   │
        │          │ START DISCRIMINATION │            │
        │          └─────────────────────┘            │
        │                      │                       │
        │                      ▼                       │
        │          ┌─────────────────────┐     ┌ 120   │
        │          │  START TORQUE SLIDE │            │
        │          │      CONTROL        │            │
        │          └─────────────────────┘            │
        │                      │                       │
        │                      ▼                       │
        │          ┌─────────────────────┐     ┌ 130   │
        │          │    GENTLE START     │            │
        │          └─────────────────────┘            │
        │                      │                       │          140 A
        │                      ▼                       │     ┌─────────────┐
        │ 140      ┌─────────────────────┐             │     │ ASSIST FORCE│
        │          │    RUN CONTROL      │─────────────┼─────│ RESTRICTION │
        │          └─────────────────────┘             │     └─────────────┘
        │                      │                       │
        │                      ▼                       │
        │          ┌─────────────────────┐     ┌ 150   │
        │          │ STOP DISCRIMINATION │            │
        │          │      CONTROL        │            │
        │          └─────────────────────┘            │
        └──────────────────────┼──────────────────────┘
                               │
                               ▼
                    ┌─────────────────────┐
                    │     POWER OFF       │
                    └─────────────────────┘
```

FIG. 5

Flowchart (FIG. 5):

MAIN KEY SWITCH ON

SYSTEM PROTECTION — 104

→ BATTERY OVERVOLTAGE CHECK — 160

→ BATTERY LOW VOLTAGE CHECK — 170

→ LOW POWER CONSUMPTION MODE DISCRIMINATION — 180

→ TROUBLE DIAGNOSIS — 106

→ TO OTHER OPERATION — 194

START WAITING MODE — 110 A

TROUBLE ALARM — 190

END CONTROL — 192

FIG. 6

```
        ╭─────────────────────╮
        │ BEGIN START DISCRI- │──── 110
        │ MINATING FUNCTION   │
        ╰─────────────────────╯
                  │
                  ▼
              ╱╲ 110 A
            ╱     ╲            N.
          ╱ START   ╲─────────────────────────────┐
          ╲ WAITING ╱                              │
            ╲ MODE ╱                               │
              ╲╱                                   │
               │ Y      110 B                      │
               ▼                                   │
      N      ╱╲                                    │
    ◄──────╱     ╲                                 │
          ╲ F ≧ F₀ ╱                               │
            ╲     ╱                                 │
              ╲╱                                    │
               │ Y       110 D                      │
               ▼                                    │
        ┌─────────────────────┐                     │
        │  BEGIN MOTOR ASSIST │                     │
        └─────────────────────┘                     │
                  │                                  │
                  ▼            120                   │
        ┌─────────────────────┐                     │
        │ START TORQUE SLIDE  │                     │
        │ CONTROL             │                     │
        └─────────────────────┘                     │
                  │                                  │
                  ▼          120 A                   │
        ┌─────────────────────┐                     │
        │    TIMER START t    │                     │
        └─────────────────────┘                     │
                  │                                  │
                  ▼        120 B                     │
              ╱╲                                     │
            ╱     ╲          N                       │
          ╱  S = 0  ╲──────────────┐                │
          ╲         ╱              │                │
            ╲     ╱                │                │
              ╲╱                   │                │
               │ Y                 │                │
               ▼       120 C       │                │
    N       ╱╲                     │                │
  ◄───────╱     ╲                  │                │
          ╲ t ≧ 3sec ╱             │                │
            ╲     ╱    N           │                │
              ╲╱         120 D     │                │
               │ Y    120 E  │     │                │
               ▼             ▼     │                │
     ┌──────────────────┐  ┌──────────┐            │
     │  F₀ + α ⇒ F₀      │  │ F₀ ⇒ F₀  │            │
     └──────────────────┘  └──────────┘            │
               │              │                     │
               ▼    102       │                     │
     ┌──────────────────┐     │                     │
     │ STOPPING PROCESS │     │                     │
     └──────────────────┘     │                     │
               │              │◄────────────────────┘
               │              │
               │              ▼
               │        ╭──────────╮
               │        │   END    │
               │        ╰──────────╯
```

$F \geqq F_0$

$S = 0$

$t \geqq 3\text{sec}$

$F_0 + \alpha \Rightarrow F_0$

$F_0 \Rightarrow F_0$

FIG. 7

```
      ┌─────────────────────┐
      │  BEGIN ASSIST FORCE │────  140 A
      │  RESTRICTION        │
      └─────────────────────┘
                │
                ▼
      ┌─────────────────────┐
      │ CURRENT TARGET DUTY DN │──── 140 B
      │ PREVIOUS TARGET DUTY DN-1│
      └─────────────────────┘
                │
                ▼              140 C
              ◇ DN > DN-1 ◇─────N─────────────┐
                │                             │
                Y                             │
                ▼    140 D                    ▼         140 J
      ┌──────────────────┐          ┌──────────────────┐
      │ D1 = DN-1 + 10   │          │ D1 = DN-1 - 10   │
      └──────────────────┘          └──────────────────┘
                │                             │
                ▼    140 E                    ▼    140 K
          ◇ DN < D1 ◇──N──┐           ◇ DN > D1 ◇──N──┐
                │         │                 │         │
                Y         │ 140 I     140 L │ Y       │ 140 M
       140 F    ▼         ▼                 ▼         ▼
      ┌──────┐ ┌──────┐ ┌──────┐ ┌──────┐
      │D2=DN │ │D2=D1 │ │D2=DN │ │D2=D1 │
      └──────┘ └──────┘ └──────┘ └──────┘
          │
          ▼
      ┌─────────────────┐
      │ ASSUME D2 AS    │──── 140 G
      │ TARGET DUTY     │
      └─────────────────┘
          │
          ▼
      ┌─────────────────┐
      │ D2 ⇒ DN-1       │──── 140 H
      └─────────────────┘
```

$D_N > D_{N-1}$

$D_1 = D_{N-1} + 10$

$D_1 = D_{N-1} - 10$

$D_N < D_1$

$D_N > D_1$

$D_2 = D_N$

$D_2 = D_1$

$D_2 = D_N$

$D_2 = D_1$

$D_2 \Rightarrow D_{N-1}$

FIG. 8

FIG. 9

```
              ┌─────────────────────────┐
              │  STOP DISCRIMINATION    │───  150
              │  CONTROL                │
              └─────────────────────────┘
                          │
         ┌────────────────┤
         │                │        150 A
         │           ╱─────────╲         N
         │          ╱  S = 0    ╲──────────────────────┐
         │          ╲           ╱                      │
         │           ╲─────────╱                       │
         │                │ Y                          │
         │                │        150 B               │
         │           ╱─────────╲         150 G         │
         │          ╱  F < F₁   ╲──────╱─────────╲  N   │
         │          ╲           ╱      ╲ F ≥ F₂  ╱─────→│
         │           ╲─────────╱        ╲       ╱       │
         │                │ Y            ╲─────╱        │
  Y      │          150 C                  │ Y   150 H  │
  ┌──────┤      ╱───────────────╲          │            │
  │      │     ╱ STOP DISCRIMINATION╲   ╱──────────────╲  N
  │      │     ╲ TIMER COUNTING t  ╱  ╱ PEDAL FORCE VARIATION╲→
  │      │      ╲───────────────╱    ╲ WIDTH ΔF < ΔF₀ ╱
  │      │            │ N  150 D       ╲─────────────╱
  │      │     ┌──────────────┐             │ Y  150 I
  │      │     │ TIMER START t│        Y    │
  │      │     └──────────────┘        ┌────┤
  │      │            │          150 E │  ╱───────────────╲
  │      └────────────┤                │ ╱ STOP DISCRIMINATION╲
  │  N          ╱─────────╲            │ ╲ TIMER COUNTING t  ╱
  │←───────────╱  t > t₀   ╲           │  ╲───────────────╱
  │            ╲           ╱           │        │ N  150 J
  │             ╲─────────╱            │  ┌──────────────┐
  │                  │ Y               │  │ TIMER START t₁│
  │                  │                 │  └──────────────┘
  │                  │                 │        │  150 K
  │                  │            Y    │        │
  │                  │←───────────┬────────╱─────────╲
  │            102   │            │    ╲ t₁ > t₁₀  ╱
  │    ┌──────────────────┐        │    ╲         ╱
  │    │ STOPPING PROCESS │        │     ╲───────╱
  │    └──────────────────┘        │        │ N  150 L
  │                  │             │  ┌──────────────┐
  │                  │             │  │ TIMER RESET  │
  │                  │             │  └──────────────┘
  │            ┌───────────┐       │        │
  │            │   END     │←──────┴────────┘
  └────────────└───────────┘
```

FIG. 10

```
        ┌─────────────────────┐
        │  BEGIN BATTERY LOW   │────── 170
        │  VOLTAGE CONTROL     │
        └─────────────────────┘
                  │
                  ▼
170 A                              Y
      ╱─────────────────╲ ──────────────────────────┐
      ╲  V_B  < V_th1   ╱                            │
       ╲───────────────╱                             │
              │ N                             170 C  ▼
              ▼                          ┌──────────────────┐
170 B                    Y              │ LED LIGHTS UP,    │
      ╱─────────────────╲ ──────┐       │ TIMER START t_2   │
      ╲  V_B  < V_th2   ╱       │       └──────────────────┘
       ╲───────────────╱        │                │
              │ N         170 F ▼                 │
              │        ┌──────────────┐           │
              │        │ LED FLASHES  │           │
              │        └──────────────┘           ▼◄────────┐
              │              │                              │
              │◄─────────────┘                       170 D  │
              │                              ╱───────────────╲
              │                              ╲  t_2  > t_20  ╱──┘
              ▼                               ╲─────────────╱
170 G                                 192            │
   ┌─────────────────────┐         ┌──────────────────┐
   │  TO OTHER PROCESS    │         │   END CONTROL    │
   └─────────────────────┘         └──────────────────┘
```

18

FIG. 11

BEGIN TROUBLE DIAGNOSIS — 106 A

106 B

S = 0 → N

↓ Y

DETECT PEDAL FORCE VARIATION WIDTH ΔF — 106 C

106 D

$\triangle F \geqq \triangle F_0$ → N

↓ Y

Timer Start $t_3$ — 106 E

106 F

N ← $t_3 \geqq t_{30}$

↓ Y

TROUBLE PRESENT, ALARM TIMER RESET — 106 G

END CONTROL — 192

NO TROUBLE, TIMER RESET — 106 I

TO OTHER CONTROL

106 J

FIG. 12

a)

b)

FIG. 13

```
┌─────────────────┐              ┌─────────────────┐
│  DETECT PEDAL   │  ╱ 54        │  DETECT VEHICLE │  ╱ 66
│    FORCE F      │              │     SPEED S     │
└─────────────────┘              └─────────────────┘
         │                                │
         ▼                                ▼
┌─────────────────┐              ┌─────────────────┐
│ DETECT VARIATION│  ╱ 202       │   DISCRIMINATE  │  ╱ 200
│   WIDTH ΔF      │              │  VEHICLE SPEED  │
└─────────────────┘              └─────────────────┘
         │                                │
         └────────────┐      ┌────────────┘
                      ▼      ▼
              ┌─────────────────────┐
              │ COMPARE VARIATION   │  ╱ 204
              │ WIDTH, ΔF > ΔFo     │
              └─────────────────────┘
                        │ Ts
                        ▼
              ┌─────────────────────┐
              │   S                 │  ╱ 206
              │ RS     TIMER        │
              └─────────────────────┘
                        │
                        ▼
              ┌─────────────────────┐
              │      MEMORY         │  ╱ 208
              └─────────────────────┘
                        │
                        ▼
              ┌─────────────────────┐
              │    ALARM MEANS      │  ╱ 210
              └─────────────────────┘
                        │
                        ▼
              ┌─────────────────────┐
              │ STOPPING PROCESS    │  ╱ 212
              │      MEANS          │
              └─────────────────────┘
```